# EUROPEAN PATENT APPLICATION

(11) **EP 4 790 240 A1**
(43) Date of publication of application: **12.08.2026**
(21) Application number: 26157023.8
(22) Date of filing: 06.02.2026
(51) Int. Cl.: F01D 11/24

(54) **AIR SYSTEM FOR OPEN ROTOR AIRCRAFT PROPULSION SYSTEM**

(30) Priority: 06.02.2025 US 202519046892
(71) Applicant: RTX Corporation, Farmington, CT 06032 (US)
(72) Inventor: MORTON, Jeffrey T., Manchester (US); CLARK, Thomas E., Wells (US)
(74) Representative: Dehns

(57) **Abstract**

An aircraft propulsion system (20) includes an open propulsor rotor, a turbine engine (32) and an air system (34). The turbine engine (32) is configured to drive rotation of the open propulsor rotor about an axis (24). The turbine engine (32) includes an engine rotor (82, 82, 84, 85) and a shroud (146). The engine rotor (82, 82, 84, 85) includes a plurality of rotor blades arranged circumferentially around the rotor base in an array. The shroud (146) is next to and circumscribes the array of the rotor blades. The air system (34) includes an electric boost compressor (122), an air circuit (116) and a clearance control device (114). The air circuit (116) extends longitudinally through the electric boost compressor (122) from an air source to the clearance control device (114). The clearance control device (114) is configured to control a clearance between the shroud (146) and the rotor blades using air received from the air source through the air circuit (116).

## Description

### BACKGROUND OF THE DISCLOSURE

### 1. Technical Field

This disclosure relates generally to an aircraft and, more particularly, to an air system for an aircraft propulsion system.

### 2. Background Information

An aircraft propulsion system may include an air system for supplying pressurized air to one or more components and/or sub-systems of the aircraft propulsion system. Various types and configurations of air systems are known in the art. While these known air systems have various benefits, there is still room in the art for improvement.

### SUMMARY OF THE DISCLOSURE

According to an aspect of the present disclosure, a propulsion system is provided for an aircraft. This aircraft propulsion system includes an open propulsor rotor, a turbine engine and an air system. The turbine engine is configured to drive rotation of the open propulsor rotor about an axis. The turbine engine includes a first engine rotor and a first shroud. The first engine rotor includes a first rotor base and a plurality of first rotor blades arranged circumferentially around the first rotor base in an array. The first shroud is next to and circumscribes the array of the first rotor blades. The air system includes an electric boost compressor, an air circuit and a first clearance control device. The air circuit extends longitudinally through the electric boost compressor from an air source to the first clearance control device. The first clearance control device is configured to control a first clearance between the first shroud and the first rotor blades using air received from the air source through the air circuit.

According to another aspect of the present disclosure, another propulsion system is provided for an aircraft. This aircraft propulsion system includes a turbine engine and an air system. The turbine engine includes a first engine rotor, a second engine rotor, a first shroud and a second shroud. The first engine rotor includes a first rotor base and a plurality of first rotor blades arranged circumferentially around the first rotor base in a first rotor blade array. The first shroud is next to and circumscribes the first rotor blade array. The second engine rotor includes a second rotor base and a plurality of second rotor blades arranged circumferentially around the second rotor base in a second rotor blade array. The second shroud is next to and circumscribes the second rotor blade array. The air system includes an electric boost compressor, an air circuit, a first clearance control device and a second clearance control device. The air circuit extends longitudinally through the electric boost compressor from an air source to the first clearance control device and the second clearance control device. The first clearance control device is aligned with and circumscribes the first shroud. The second clearance control device is aligned with and circumscribes the second shroud. The air system is configured to selectively direct air received from an airflow inlet into the air circuit to the first clearance control device and/or the second clearance control device.

According to still another aspect of the present disclosure, another propulsion system is provided for an aircraft. This aircraft propulsion system includes an open propulsor rotor, a turbine engine and an air system. The turbine engine is configured to drive rotation of the open propulsor rotor about an axis. The air system includes an electric boost compressor, an air circuit and a flow regulator. The air circuit extends longitudinally from an airflow inlet into the propulsion system to a member of the propulsion system. The air circuit includes an inlet leg and a plurality of circuit legs. The circuit legs are fluidly coupled in parallel between the inlet leg and the member of the propulsion system. A first of the circuit legs extends longitudinally through the electric boost compressor. A second of the circuit legs bypasses the electric boost compressor. The flow regulator is configured to fluidly couple the inlet leg to the first of the circuit legs during a first mode. The flow regulator is configured to fluidly couple the inlet leg to the second of the circuit legs during a second mode.

The member of the aircraft may be configured as or otherwise include a clearance control device for a bladed rotor in the turbine engine.

The air system may also be configured to selectively direct the air received from the airflow inlet into the air circuit at least one of through the electric boost compressor or around the electric boost compressor prior to directing the air to the at least one of the first clearance control device or the second clearance control device.

The aircraft propulsion system may be configured as an open rotor propulsion system.

The aircraft propulsion system may also include a propulsor rotor and a core of the turbine engine configured to power rotation of the propulsor rotor. The core of the turbine engine includes a compressor section, a combustor section, a turbine section and an engine flowpath. The engine flowpath extends longitudinally through the compressor section, the combustor section and the turbine section from an airflow inlet into the engine flowpath to a combustion products exhaust from the engine flowpath.

The turbine engine may also include an engine case. The first shroud may be disposed radially inboard of and may be attached to the engine case. The first clearance control device may include a manifold separated from the engine case by a plenum. The manifold may include a plurality of apertures configured to direct a plurality of air jets into the plenum towards the engine case.

The first engine rotor may be a turbine rotor.

The first engine rotor may be operatively coupled to the open propulsor rotor.

The first engine rotor may be operatively decoupled from the open propulsor rotor.

The air circuit may include an inlet leg and a plurality of distribution legs downstream of and fluidly coupled in parallel to the inlet leg. The electric boost compressor may be arranged inline along the air circuit between the inlet leg and the distribution legs. A first of the distribution legs may be fluidly coupled with and upstream of the first clearance control device. A second of the distribution legs may be fluidly coupled with and upstream of a member of the aircraft that is discrete from the first clearance control device.

The turbine engine may also include a second engine rotor and a second shroud. The second engine rotor may include a second rotor base and a plurality of second rotor blades arranged circumferentially around the second rotor base in an array. The second shroud may be next to and circumscribe the array of the second rotor blades. The air system may also include a second clearance control device. The second clearance control device may be configured to control a second clearance between the second shroud and the second rotor blades using the air received from the air source through the air circuit. The member of the aircraft may be configured as or otherwise include the second clearance control device.

The member of the aircraft may be configured as or otherwise include a heat exchanger.

The member of the aircraft may be configured as or otherwise include a turbine rotor.

The member of the aircraft may be configured as or otherwise include the first engine rotor.

The turbine engine may include a bearing within a bearing compartment. The member of the aircraft may be configured as or otherwise include the bearing compartment.

The turbine engine may include an electronic device within a compartment. The member of the aircraft may be configured as or otherwise include the compartment.

The air circuit may also include a flow regulator configured to: direct at least some of the air received from the air source through the inlet leg to the first of the distribution legs during a first mode; and direct at least some of the air received from the air source through the inlet leg to the second of the distribution legs during a second mode.

The flow regulator may also be configured to fluidly decouple the inlet leg from the second of the distribution legs during the first mode.

The flow regulator may also be configured to fluidly decouple the inlet leg from the first of the distribution legs during the second mode.

The air circuit may include a plurality of parallel legs upstream of the first clearance control device. A first of the parallel legs may extend longitudinally through the electric boost compressor. A second of the parallel legs may bypass the electric boost compressor.

The air circuit may also include an inlet leg extending longitudinally from an airflow inlet into the air circuit towards the parallel legs. The air system may also include a flow regulator configured to: direct at least some of the air received from the air source through the inlet leg to the first of the parallel legs during a first mode; and direct at least some of the air received from the air source through the inlet leg to the second of the parallel legs during a second mode.

The flow regulator may also be configured to fluidly decouple the inlet leg from the second of the parallel legs during the first mode.

The flow regulator may also be configured to fluidly decouple the inlet leg from the first of the parallel legs during the second mode.

The air source may be outside of the turbine engine.

The aircraft propulsion system may also include a housing structure housing the turbine engine and the air system. The housing structure may include an exterior surface bordering an environment external to the propulsion system. An airflow inlet into the air circuit from the air source may be disposed in the exterior surface.

The aircraft propulsion system may also include a plurality of open guide vanes arranged circumferentially about the housing structure. A first of the open guide vanes may project radially out from the housing structure into the environment external to the propulsion system. The airflow inlet into the air circuit may be disposed between the first of the open guide vanes and a combustion products exhaust from the turbine engine.

The present disclosure may include any one or more of the individual features disclosed above and/or below alone or in any combination thereof.

The foregoing features and the operation of the invention will become more apparent in light of the following description and the accompanying drawings.

### BRIEF DESCRIPTION OF THE DRAWINGS

FIG. 1 is a schematic sectional illustration of an aircraft propulsion system.
FIG. 2 is a schematic sectional illustration of a portion of the aircraft propulsion system at a propulsion section.
FIG. 3 is a schematic illustration of a portion of the aircraft propulsion system at an air system during a free-flow mode.
FIG. 4 is a schematic illustration of a portion of the aircraft propulsion system at the air system during a boost mode.
FIG. 5 is a schematic illustration of a portion of the air system at a set of clearance control devices during a first device mode.
FIG. 6 is a schematic illustration of a portion of the air system at the set of clearance control devices during a second device mode.
FIG. 7 is a schematic end view illustration of an exemplary clearance control device arranged with a rotor system.
FIG. 8 is a schematic sectional illustration of a portion of the exemplary clearance control device arranged with the rotor system.
FIG. 9 is a schematic illustration of a portion of the aircraft propulsion system at an alternative air system.

### DETAILED DESCRIPTION

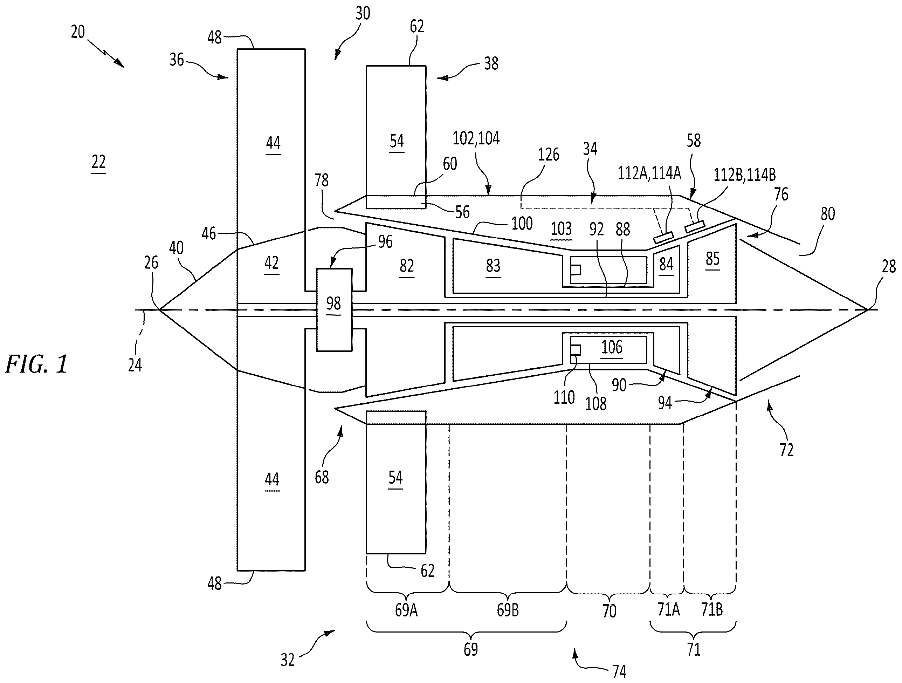

FIG. 1 is a schematic illustration of a propulsion system 20 for an aircraft. The aircraft may be an airplane, a drone (e.g., an unmanned aerial vehicle (UAV)), or any other manned or unmanned aerial vehicle or system. The aircraft propulsion system 20 may be configured as an open rotor propulsion system with a single open rotor and swirl recovery vane (SRV) architecture. Herein, the term "open" may describe a propulsion system section and/or a propulsion system component which is open to an environment 22 (e.g., an ambient environment) external to the aircraft propulsion system 20 and, more generally, the aircraft.

The aircraft propulsion system 20 extends axially along an axis 24 between an upstream, forward end 26 of the aircraft propulsion system 20 and a downstream, aft end 28 of the aircraft propulsion system 20. The propulsion system axis 24 may be a centerline axis of the aircraft propulsion system 20 and/or a centerline axis of one or more members of the aircraft propulsion system 20. The propulsion system axis 24 may also or alternatively be a rotational axis of one or more members of the aircraft propulsion system 20. The aircraft propulsion system 20 of FIG. 1 includes an open rotor propulsion section 30 (e.g., an open rotor propulsion module), a gas turbine engine 32 and an air system 34.

The propulsion section 30 of FIG. 1 includes an open propulsor rotor 36 and an open guide vane structure 38. These propulsion section members 36 and 38 are un-ducted components of the aircraft propulsion system 20 and its propulsion section 30. The propulsion section 30 of FIG. 1 also includes a nose cone 40 disposed at (e.g., on, adjacent or proximate) the propulsion system forward end 26. Briefly, this nose cone 40 may be configured as a spinner which is rotatable with the propulsor rotor 36 about the propulsion system axis 24. Alternatively, the nose cone 40 may be configured as a stationary structure of the propulsion section 30.

The propulsor rotor 36 includes a rotor base 42 (e.g., a disk or a hub) and a plurality of open propulsor blades 44 (e.g., airfoils). The propulsor blades 44 are arranged and may be equispaced circumferentially about the rotor base 42 and the propulsion system axis 24 in an array; e.g., a circular array. This array of the propulsor blades 44 may be unshrouded or alternatively shrouded by a tubular propulsor rotor shroud dedicated to the propulsor rotor 36 for example. Each of the propulsor blades 44 is connected to (e.g., formed integral with or otherwise attached to) the rotor base 42. Each of the propulsor blades 44 projects spanwise along a span line of the respective propulsor blade 44 (e.g., radially relative to the propulsion system axis 24) out from an exterior surface 46 of the rotor base 42, into the external environment 22, to a distal tip 48 of the respective propulsor blade 44. Here, the exterior surface 46 radially borders the external environment 22 and forms an inner platform surface of the propulsor rotor 36. Each propulsor blade 44 is thereby configured as an un-ducted propulsor blade which is exposed to (e.g., disposed in) the surrounding external environment 22.

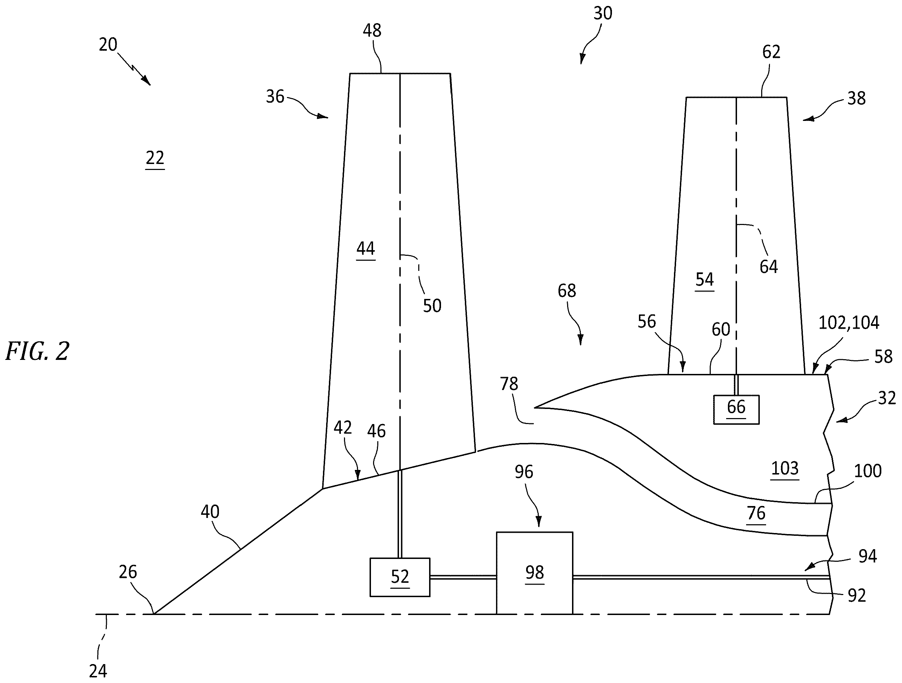

Referring to FIG. 2, each propulsor blade 44 may be configured to pivot about a respective blade pivot axis 50. This blade pivot axis 50 may extend generally radially relative to the propulsion system axis 24. Each propulsor blade 44 of FIG. 2 is operatively coupled with a blade actuation system 52. This blade actuation system 52 is configured to pivot each propulsor blade 44 about its respective blade pivot axis 50. By pivoting each propulsor blade 44 about its blade pivot axis 50, a pitch of the respective propulsor blade 44 may be changed. Of course, it is contemplated some or all of the propulsor blades 44 may be alternatively moved to change the propulsor blade pitch and/or another propulsor blade parameter such as blade camber. Moreover, it is contemplated some or all of the propulsor blades 44 may alternatively be fixed position propulsor blades in other embodiments.

The guide vane structure 38 of FIG. 1 includes a plurality of open exit guide vanes 54 (e.g., airfoils) that are arranged and may be equispaced circumferentially about the propulsion system axis 24 in an array; e.g., a circular array. This array of the guide vanes 54 may be unshrouded or alternatively shrouded by a tubular guide vane shroud dedicated to the guide vane structure 38 for example. The guide vane structure 38 and its guide vanes 54 are arranged axially next to (e.g., adjacent) the propulsor rotor 36 and its propulsor blades 44. The guide vane structure 38 and its guide vanes 54 of FIG. 1, for example, are arranged downstream of the propulsor rotor 36 and its propulsor blades 44, without (e.g., any) other elements axially therebetween to obstruct, turn and/or otherwise influence the air propelled by the propulsor rotor 36 to the guide vane structure 38 for example. Each of the guide vanes 54 of FIG. 1 is coupled to a support structure 56 of a stationary housing structure 58 for the aircraft propulsion system 20. This support structure 56 may be configured as or otherwise include a support frame, a case and/or another fixed structure of the housing structure 58. Each of the guide vanes 54 projects spanwise along a span line of the respective guide vane 54 (e.g., radially relative to the propulsion system axis 24) out from an exterior surface 60 of the housing structure 58, into the external environment 22, to a distal tip 62 of the respective guide vane 54. Here, the exterior surface 60 radially borders the external environment 22 and forms an exterior aerodynamic flow surface of the aircraft propulsion system 20. Each guide vane 54 is thereby configured as an un-ducted guide vane which is exposed to (e.g., disposed in) the surrounding external environment 22.

Referring to FIG. 2, each guide vane 54 may be configured to pivot about a respective vane pivot axis 64. This vane pivot axis 64 may extend generally radially relative to the propulsion system axis 24. Each guide vane 54 of FIG. 2 is operatively coupled with a vane actuation system 66. This vane actuation system 66 may be discrete from or integrated as part of the blade actuation system 52. The vane actuation system 66 is configured to pivot each guide vane 54 about its respective vane pivot axis 64. By pivoting each guide vane 54 about its vane pivot axis 64, a pitch of the respective guide vane 54 may be changed. Of course, it is contemplated some or all of the guide vanes 54 may be alternatively moved to change the guide vane pitch and/or another guide vane parameter such as vane camber. Moreover, it is contemplated some or all of the guide vanes 54 may alternatively be fixed position guide vanes in other embodiments.

Referring to FIG. 1, the aircraft propulsion system 20 and its turbine engine 32 include an inlet section 68, a compressor section 69, a combustor section 70, a turbine section 71 and an exhaust section 72. The compressor section 69 of FIG. 1 includes a low pressure compressor (LPC) section 69A and a high pressure compressor (HPC) section 69B. The turbine section 71 of FIG. 1 includes a high pressure turbine (HPT) section 71A and a low pressure turbine (LPT) section 71B. At least (or only) the LPC section 69A, the HPC section 69B, the combustor section 70, the HPT section 71A and the LPT section 71B collectively form a core 74 (e.g., a gas generator) of the turbine engine 32. The aircraft propulsion system 20 and its turbine engine 32 also include an engine flowpath 76; e.g., an annular core flowpath. This engine flowpath 76 extends longitudinally through the engine core 74 from an airflow inlet 78 into the engine flowpath 76 to a combustion products exhaust 80 from the engine flowpath 76. The flowpath inlet 78 of FIG. 1 is also an airflow inlet into the aircraft propulsion system 20 and its turbine engine 32. The flowpath exhaust 80 of FIG. 1 is also a combustion products exhaust from the aircraft propulsion system 20 and its turbine engine 32.

The LPC section 69A includes a bladed low pressure compressor (LPC) rotor 82. The HPC section 69B includes a bladed high pressure compressor (HPC) rotor 83. The HPT section 71A includes a bladed high pressure turbine (HPT) rotor 84. The LPT section 71B includes a bladed low pressure turbine (LPT) rotor 85. Each of these engine rotors 82-85 includes a rotor base (e.g., a disk or a hub) and a plurality of rotor blades (e.g., airfoils, vanes, etc.). The rotor blades are arranged and may be equispaced circumferentially around the respective rotor base in an array. The rotor blades may also be arranged into one or more stages longitudinally along the engine flowpath 76. Each of the rotor blades is connected to the respective rotor base. Each of the rotor blades projects radially (e.g., spanwise) out from the respective rotor base into the engine flowpath 76 and to a distal tip of the respective rotor blade.

The HPC rotor 83 is coupled to and rotatable with the HPT rotor 84. The HPC rotor 83 of FIG. 1, for example, is connected to the HPT rotor 84 by a high speed shaft 88. At least (or only) the HPC rotor 83, the HPT rotor 84 and the high speed shaft 88 collectively form a high speed rotating structure 90; e.g., a high speed spool of the turbine engine 32 and its engine core 74. This high speed rotating structure 90 of FIG. 1 and its members 83, 84 and 88 are rotatable about the propulsion system axis 24. However, in other embodiments, the high speed rotating structure 90 and its members 83, 84 and 88 may alternatively be rotatable about another rotational axis which is (e.g., laterally and/or angularly) offset from the rotational axis of the propulsor rotor 36.

The LPC rotor 82 is coupled to and rotatable with the LPT rotor 85. The LPC rotor 82 of FIG. 1, for example, is connected to the LPT rotor 85 by a low speed shaft 92. At least (or only) the LPC rotor 82, the LPT rotor 85 and the low speed shaft 92 collectively form a low speed rotating structure 94; e.g., a low speed spool of the turbine engine 32 and its engine core 74. This low speed rotating structure 94 of FIG. 1 and its members 82, 85 and 92 are rotatable about the propulsion system axis 24. However, in other embodiments, the low speed rotating structure 94 and its members 82, 85 and 92 may alternatively be rotatable about another rotational axis which is (e.g., laterally and/or angularly) offset from the rotational axis of the propulsor rotor 36.

The low speed rotating structure 94 is coupled to the propulsor rotor 36 through a drivetrain 96. This drivetrain 96 may be configured as a geared drivetrain, where a geartrain 98 (e.g., a transmission, a speed change device, an epicyclic geartrain, etc.) is disposed between and operatively couples the propulsor rotor 36 to the low speed rotating structure 94 and its LPT rotor 85. With this arrangement, the propulsor rotor 36 may rotate at a different (e.g., slower) rotational speed than the low speed rotating structure 94 and its LPT rotor 85. Here, the propulsor rotor 36 and the low speed rotating structure 94 may rotate in a common (the same) direction about the propulsion system axis 24 or in opposite directions about the propulsion system axis 24 depending, for example, upon the specific configuration of the geartrain 98. Alternatively, the drivetrain 96 may be configured as a direct-drive drivetrain, where the geartrain 98 is omitted. With such an arrangement, the propulsor rotor 36 rotates at a common (the same) rotational speed as the low speed rotating structure 94 and its LPT rotor 85.

The engine sections 68-72 may be arranged sequentially along the propulsion system axis 24 and are housed within and/or formed by the housing structure 58. This housing structure 58 includes an engine case 100 (e.g., a gas generator case), a propulsion system nacelle 102 and an internal housing compartment 103. The engine case 100 houses one or more of the engine sections 69A-71B; e.g., the engine core 74. The engine case 100 of FIG. 1, for example, extends axially along (e.g., axially overlaps) and extends circumferentially about (e.g., circumscribes) the engine sections 69A-71B and the respective engine rotors 82-85. The engine case 100 may also house at least a portion of the drivetrain 96 and its geartrain 98. The propulsion system nacelle 102 houses and provides an aerodynamic cover over the engine case 100. An exterior wall 104 of the propulsion system nacelle 102 of FIG. 1, for example, is disposed radially outboard of, extends axially along (e.g., axially overlaps) and extends circumferentially about (e.g., circumscribes) the engine core 74 and its engine case 100. This nacelle wall 104 may at least partially or completely form the exterior surface 60. The housing compartment 103 of FIG. 1 is at least partially or completely formed by and is disposed radially between the engine case 100 and the nacelle wall 104. With the foregoing arrangement, the engine rotors 82-85 are disposed within the housing structure 58. By contrast, the propulsor rotor 36 and the guide vane structure 38 are disposed at least partially (or completely) outside of the housing structure 58 within the external environment 22.

During operation of the aircraft propulsion system 20 of FIG. 1, ambient air within the external environment 22 is propelled by the rotating propulsor rotor 36 in the downstream, aft direction towards the propulsion system aft end 28. A major portion (e.g., more than 50%) of this air bypasses the turbine engine 32 to provide forward thrust while a minor portion (e.g., less than 50%) of the air flows into the aircraft propulsion system 20 and its turbine engine 32. For example, an outer stream of the air propelled by the rotating propulsor rotor 36 flows axially across the guide vane structure 38 and outside of the housing structure 58 and its exterior surface 60; e.g., along an exterior of the propulsion system nacelle 102. The guide vane structure 38 conditions (e.g., straightens out, de-swirls, etc.) the outer stream of air within the external environment 22 to enhance the forward thrust. By contrast, an inner stream of the air propelled by the rotating propulsor rotor 36 may bypass the guide vane structure 38 and enter the turbine engine 32 and its engine flowpath 76 through the flowpath inlet 78. The air entering the engine flowpath 76 through the flowpath inlet 78 may be referred to as "core air".

The core air is compressed by the LPC rotor 82 and the HPC rotor 83 and directed into a combustion chamber 106 (e.g., an annular combustion chamber) of a combustor 108 (e.g., an annular combustor) in the combustor section 70. Fuel is injected into the combustion chamber 106 by one or more fuel injectors 110 and mixed with the compressed core air to provide a fuel-air mixture. This fuel-air mixture is ignited and combustion products thereof flow through and sequentially drive rotation of the HPT rotor 84 and the LPT rotor 85. The rotation of the HPT rotor 84 and the LPT rotor 85 respectively drive rotation of the HPC rotor 83 and the LPC rotor 82 and, thus, compression of the core air. The rotation of the LPT rotor 85 also drives the rotation of the propulsor rotor 36 through the drivetrain 96 and its geartrain 98. The turbine engine 32 and its low speed rotating structure 94 thereby power operation of (e.g., drive rotation of) the propulsor rotor 36 during aircraft propulsion system operation.

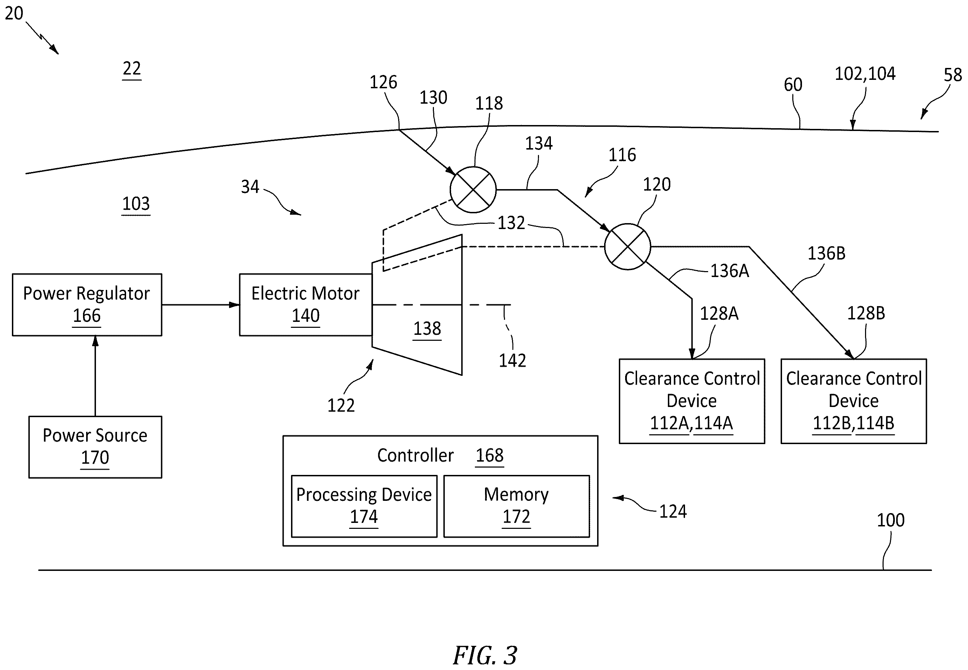

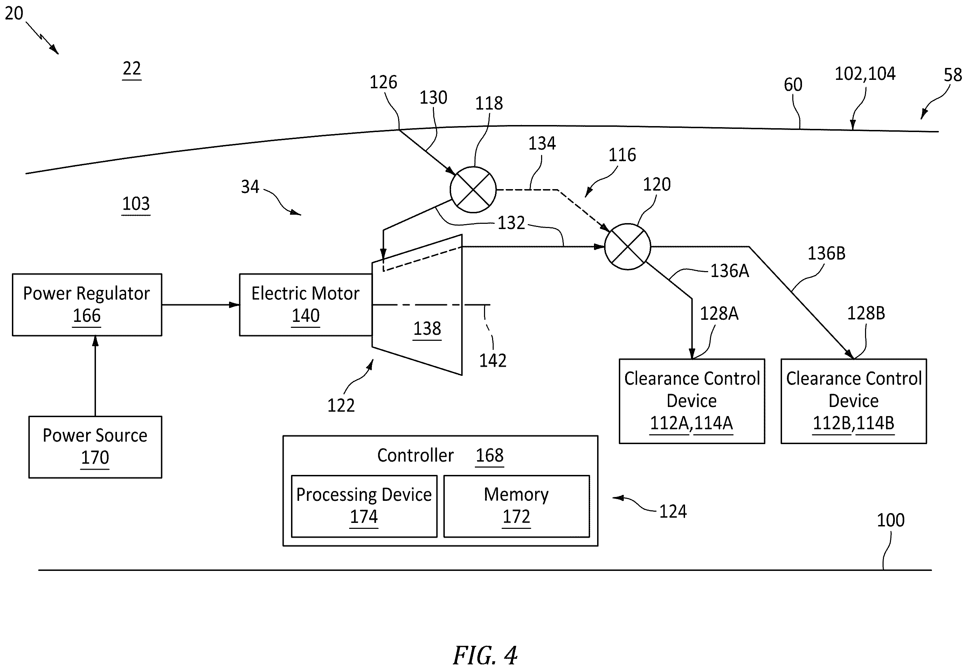

Referring to FIGS. 3 and 4, the air system 34 is configured to provide pressurized air to one or more members 112A and 112B (generally referred to as "112") of the aircraft propulsion system 20. For ease of description, these propulsion system members 112 may be described below as clearance control devices 114A and 114B (generally referred to as "114") for an active clearance control (ACC) system of the turbine engine 32. The present disclosure, however, is not limited to such an exemplary arrangement as described below in further detail. Moreover, it is contemplated the air system 34 may also or alternatively provide the pressurized air to one or more members of the aircraft outside of the aircraft propulsion system 20. Referring again to FIGS. 3 and 4, the air system 34 includes an air circuit 116, one or more flow regulators 118 and 120 and a boost compressor 122. The air system 34 of FIGS. 3 and 4 also includes a control system 124.

The air circuit 116 of FIGS. 3 and 4 extends longitudinally within the aircraft propulsion system 20 from an airflow inlet 126 into the air circuit 116 to an airflow inlet 128A, 128B (generally referred to as "128") into each clearance control device 114A, 114B. More particularly, the air circuit 116 extends longitudinally from the circuit inlet 126, sequentially through the upstream flow regulator 118, (e.g., optionally) through the boost compressor 122 and through the downstream flow regulator 120, to each clearance control device 114 and its device inlet 128. The air circuit 116 of FIGS. 3 and 4, for example, includes an inlet leg 130, a compressor leg 132, a bypass leg 134 and one or more distribution legs 136A and 136B (generally referred to as "136"). The inlet leg 130 projects longitudinally from the circuit inlet 126 towards an inlet into the compressor leg 132 and an inlet into the bypass leg 134. The compressor leg 132 and the bypass leg 134 are arranged fluidly in parallel between the upstream flow regulator 118 and the downstream flow regulator 120. The compressor leg 132 extends longitudinally through the boost compressor 122, and the compressor leg 132 fluidly couples the inlet leg 130 (through the upstream flow regulator 118) to the downstream distribution legs 136 (through the downstream flow regulator 120). The bypass leg 134 is disposed outside of and bypasses the boost compressor 122, and the bypass leg 134 fluidly couples the inlet leg 130 (through the upstream flow regulator 118) to the downstream distribution legs 136 (through the downstream flow regulator 120). The distribution legs 136 are fluidly coupled in parallel to the inlet leg 130 through the air system members 132 and/or 134. The first distribution leg 136A extends longitudinally from the downstream flow regulator 120 to the first clearance control device 114A and its first device inlet 128A. The second distribution leg 136B extends longitudinally from the downstream flow regulator 120 to the second clearance control device 114B and its second device inlet 128B.

The upstream flow regulator 118 of FIGS. 3 and 4 is configured to selectively fluidly couple the inlet leg 130 and, thus, the circuit inlet 126 to the compressor leg 132 and/or the bypass leg 134. The upstream flow regulator 118, for example, may be configured as or otherwise include a flow diverter, a switching valve or a switching valve system. Referring to FIG. 3, during a free-flow mode (e.g., zero-boost mode, a passive mode) of operation, the upstream flow regulator 118 may fluidly couple the inlet leg 130 to the bypass leg 134. Here, the upstream flow regulator 118 may also fluidly decouple the inlet leg 130 from the compressor leg 132. Referring to FIG. 4, during a boost mode (e.g., an active mode) of operation, the upstream flow regulator 118 may fluidly couple the inlet leg 130 to the compressor leg 132. Here, the upstream flow regulator 118 may also fluidly decouple the inlet leg 130 from the bypass leg 134. Of course, it is also contemplated the upstream flow regulator 118 may operate in a partial boost mode where the upstream flow regulator 118 fluidly couples the inlet leg 130 to both the compressor leg 132 and the bypass leg 134 according to a controlled split ratio (e.g., 25:75, 50:50 or 75:25) between the compressor leg 132 and the bypass leg 134.

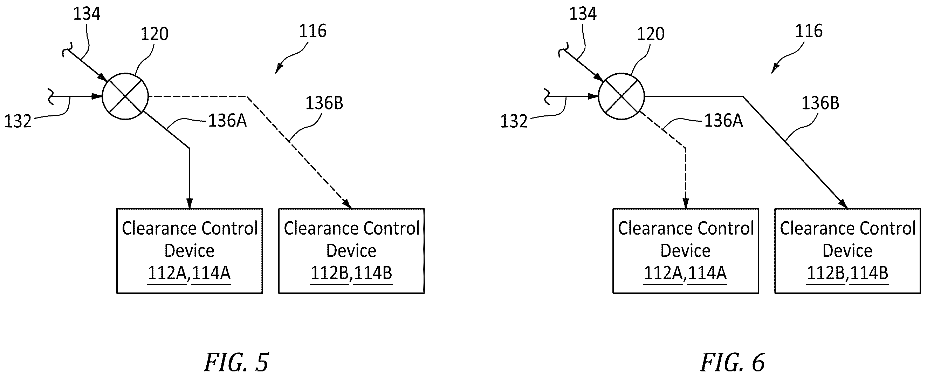

The downstream flow regulator 120 of FIGS. 3 and 4 is configured to selectively fluidly couple the upstream circuit legs 132 and 134 to the first distribution leg 136A and/or the second distribution leg 136B. The downstream flow regulator 120, for example, may be configured as or otherwise include a flow diverter, a switching valve or a switching valve system. Referring to FIGS. 3 and 4, during a multi-device mode of operation, the downstream flow regulator 120 may fluidly couple the upstream circuit legs 132 and 134 to both the first distribution leg 136A and the second distribution leg 136B according to a controlled split ratio (e.g., 25:75, 50:50 or 75:25) between the first distribution leg 136A and the second distribution leg 136B. Referring to FIG. 5, during a first device mode of operation, the downstream flow regulator 120 may fluidly couple the upstream circuit legs 132 and 134 to the first distribution leg 136A. Here, the downstream flow regulator 120 may also fluidly decouple the upstream circuit legs 132 and 134 from the second distribution leg 136B. Referring to FIG. 6, during a second device mode of operation, the downstream flow regulator 120 may fluidly couple the upstream circuit legs 132 and 134 to the second distribution leg 136B. Here, the downstream flow regulator 120 may also fluidly decouple the upstream circuit legs 132 and 134 from the first distribution leg 136A.

Referring to FIG. 4, the boost compressor 122 is configured to boost (e.g., increase) a pressure and/or a flow rate of air flowing through the air circuit 116 and its compressor leg 132. The boost compressor 122 of FIG. 4, for example, includes a compressor rotor 138 with at least (or only) one stage of compressor blades (e.g., airfoils, vanes, etc.) disposed within the air circuit 116 and its compressor leg 132. The boost compressor 122 of FIG. 4 also includes an electric motor 140 operably coupled to the compressor rotor 138. The electric motor 140 is configured to drive rotation of the compressor rotor 138 about a rotational axis 142 of the boost compressor 122, where the rotation of the compressor rotor 138 compresses the air within the air circuit 116 and its compressor leg 132. With this arrangement, the boost compressor 122 is configured as an electric boost compressor 122. Using the electric motor 140 to drive the rotation of the compressor rotor 138 may be advantageous in order to divorce operation of the boost compressor 122 from other mechanical and/or fluid systems of the aircraft propulsion system 20. However, in other embodiments, it is contemplated the compressor rotor 138 may alternatively (or also) be rotationally driven by another drive unit.

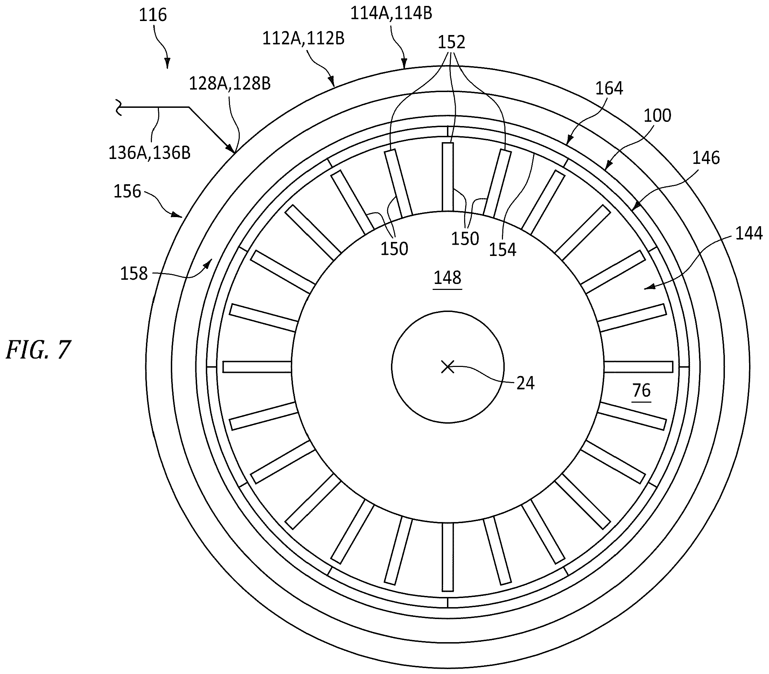

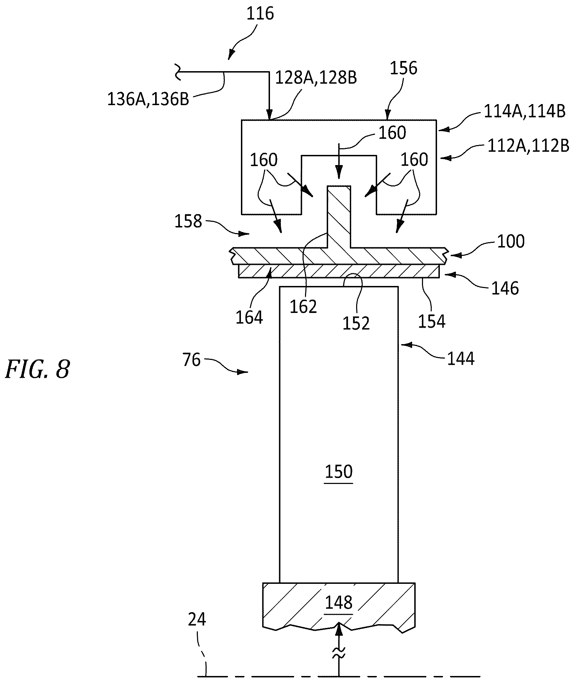

Referring to FIGS. 7 and 8, each clearance control device 114 is arranged with a respective rotor system of the turbine engine 32 and its engine core 74 (see FIG. 1). This rotor system includes a bladed engine rotor 144, a shroud 146 (e.g., a blade outer air seal (BOAS)) and the engine case 100.

The engine rotor 144 may be configured as, or otherwise included as part of, the HPT rotor 84, the LPT rotor 85 or another turbine engine rotor such as a power turbine (PT) rotor when (if included) in the turbine engine 32. The engine rotor 144 of FIG. 7 includes a rotor base 148 (e.g., a disk or a hub) and a plurality of rotor blades 150 (e.g., airfoils, vanes, etc.). The rotor blades 150 are arranged and may be equispaced circumferentially around the respective rotor base 148 in an annular array. Each of the rotor blades 150 projects radially (e.g., spanwise) out from the respective rotor base 148 into the engine flowpath 76 and to a distal tip 152 of the respective rotor blade 150.

The shroud 146 is disposed radially outboard of the array of the rotor blades 150 and radially next to the blade tips 152. The shroud 146 overlaps the array of the rotor blades 150 and the blade tips 152 longitudinally along the engine flowpath 76 and axially along the propulsion system axis 24. The shroud 146 extends circumferentially around the propulsion system axis 24 thereby circumscribing the engine rotor 144 and its array of the rotor blades 150. With this arrangement, a radial inner side 154 of the shroud 146 forms a radial outer peripheral boundary of the engine flowpath 76 longitudinally across the array of the rotor blades 150. The shroud 146 is also disposed radially inboard of and mounted to the engine case 100.

The clearance control device 114 of FIG. 8 is configured as a manifold 156 (e.g., a duct) fluidly coupled to a respective one of the distribution legs 136. This manifold 156 is spaced radially outboard from the engine case 100 by a plenum 158; e.g., an air gap. The manifold 156 is axially aligned with the shroud 146 and the array of the rotor blades 150. The manifold 156 extends circumferentially about (e.g., completely around) the engine case 100. Perforations 160 in a sidewall of the manifold 156 are configured to direct jets of air into the plenum 158 to impinge against and/or otherwise cool the engine case 100. The perforations 160 may also or alternatively be configured to direct the air jets into the plenum 158 to impinge against and/or otherwise cool a ring structure 162 (e.g., a control ring) within the plenum 158 that is fixed to a portion 164 of the engine case 100 supporting the shroud 146. By selectively cooling the engine case portion 164 and/or the ring structure 162 with the air jets, a radial clearance (e.g., a radial gap) between the shroud 146 and the blade tips 152 may be controlled; e.g., increased, decreased and/or maintained. For example, by increasing airflow through the distribution leg 136 to the respective clearance control device 114 and its manifold 156, additional cooling air directed into the plenum 158 increases cooling of the engine case portion 164 and/or the ring structure 162. This increased cooling may decrease a size (e.g., a diameter) of the engine case portion 164 through thermal contraction of material forming the engine case portion 164 and/or the ring structure 162. The thermal contraction of the engine case portion 164 in turn will locate circumferential segments of the shroud 146 further radially inboard towards the propulsion system axis 24; e.g., towards the blade tips 152. By contrast, by decreasing the airflow through the distribution leg 136 to the respective clearance control device 114 and its manifold 156, the cooling of the engine case portion 164 and/or the ring structure 162 decreases. This decreased cooling may allow the material forming the engine case portion 164 and/or the ring structure 162 to heat up and thermally expand, thereby increasing the size of the engine case portion 164. The thermal expansion of the engine case portion 164 in turn will locate circumferential segments of the shroud 146 further radially outboard away from the propulsion system axis 24; e.g., away from the blade tips 152. The clearance control device 114 of FIGS. 7 and 8 may thereby control the clearance using the air received from the air circuit 116 and its respective distribution leg 136.

Referring to FIGS. 3 and 4, the control system 124 is configured to control operation of the air system 34. The control system 124 of FIGS. 3 and 4, for example, includes an electrical power regulator 166 and a controller 168. The power regulator 166 is electrically coupled between an electrical power source 170 and the electric motor 140. This power regulator 166 may be configured as or otherwise include a switch (e.g., a contactor) and/or another current regulating device operable to selectively direct and/or regulate an electrical current from the power source 170 to the electric motor 140. Examples of the power source 170 include, but are not limited to, a battery system, an electric generator driven by the turbine engine 32, and the like.

The controller 168 of FIGS. 3 and 4 is in signal communication with (e.g., hardwired and/or wirelessly coupled to) the upstream flow regulator 118, the downstream flow regulator 120 and the power regulator 166. The controller 168 may be implemented with a combination of hardware and software. The hardware may include memory 172 and at least one processing device 174, which processing device 174 may include one or more single-core and/or multi-core processors. The hardware may also or alternatively include analog and/or digital circuitry other than that described above.

The memory 172 is configured to store software (e.g., program instructions) for execution by the processing device 174, which software execution may control and/or facilitate performance of one or more operations such as those described herein. The memory 172 may be a non-transitory computer readable medium. For example, the memory 172 may be configured as or include a volatile memory and/or a nonvolatile memory. Examples of a volatile memory may include a random access memory (RAM) such as a dynamic random access memory (DRAM), a static random access memory (SRAM), a synchronous dynamic random access memory (SDRAM), a video random access memory (VRAM), etc. Examples of a nonvolatile memory may include a read only memory (ROM), an electrically erasable programmable read-only memory (EEPROM), a computer hard drive, etc.

The air system 34 may operate in various modes of operation including, for example, the free-flow mode and the boost mode. The selection of the mode of operation may be based on an operational parameter (or multiple operational parameters). Examples of the operational parameter(s) include, but are not limited to, a temperature of the air within the external environment 22, combustion products temperature within the engine flowpath 76, and/or a throttle setting for the aircraft propulsion system 20. The operational parameter(s) may be measured, derived from an onboard model, relayed from a control program and/or otherwise obtained.

Referring to FIG. 3, the air system 34 may operate in the free-flow mode of operation when, for example, the controller 168 determines the operational parameter is equal to or below a threshold. Briefly, the threshold may be retrieved from a lookup table, or derived from a model or using an algorithm. During the free-flow mode of FIG. 3, the controller 168 signals the upstream flow regulator 118 to fluidly couple the inlet leg 130 to the bypass leg 134 while also fluidly decoupling the inlet leg 130 from the compressor leg 132. The controller 168 may also signal the power regulator 166 to electrically decouple the power source 170 from the electric motor 140 to cutoff electrical power to the electric motor 140. The electric motor 140 and, thus, the boost compressor 122 may thereby be de-energized and non-operational during the free-flow mode. With this arrangement, the air circuit 116 is operable to direct a free flow of air (e.g., bled from the external environment 22 through the circuit inlet 126) selectively through one or more of the downstream distribution legs 136 to the respective clearance control device(s) 114. The free-flow mode may also or alternatively be used during certain operating regimes; e.g., aircraft takeoff, aircraft climb and/or aircraft cruise.

Referring to FIG. 4, the air system 34 may operate in the boost mode of operation when, for example, the controller 168 determines the operational parameter is greater than the threshold. During the boost mode of FIG. 4, the controller 168 signals the upstream flow regulator 118 to fluidly couple the inlet leg 130 to the compressor leg 132 while also fluidly decoupling the inlet leg 130 from the bypass leg 134. The controller 168 may also signal the power regulator 166 to electrically couple the power source 170 to the electric motor 140 to provide electrical power to the electric motor 140. The electric motor 140 and, thus, the boost compressor 122 may thereby be energized and operational during the boost mode. With this arrangement, the air circuit 116 is operable to direct a free flow of air (e.g., bled from the external environment 22 through the circuit inlet 126) into the boost compressor 122. The boost compressor 122 compresses the air and directs the air at a higher pressure and/or at a higher flow rate through one or more of the downstream distribution legs 136 to the respective clearance control device(s) 114. The boost mode may also or alternatively be used during certain operating regimes; e.g., aircraft ground idle (e.g., while stationary or taxiing on a runway), aircraft descent and/or aircraft flight idle.

While operation of the air system 34 is described above with respect to the free-flow mode and the boost mode, it is contemplated the air system 34 may (or may not) also be operated in an intermediate mode; e.g., one or more partial boost modes. During these partial boost modes, the upstream flow regulator 118 may be controlled to direct air from the inlet leg 130 into both the compressor leg 132 and the bypass leg 134. In addition or alternatively, the electric motor 140 may be controlled to rotate the compressor rotor 138 at an intermediate speed in order to provide a moderate boost to the air within the air circuit 116.

In some embodiments, referring to FIGS. 3 and 4, one or more members (e.g., 116, 118, 120 and/or 122) of the air system 34 may be located outside of the engine core 74 (see FIG. 1) and its engine case 100. The system members 116, 118, 120 and/or 122, for example, may be disposed in the housing compartment 103 formed by and radially between the engine case 100 and the nacelle wall 104. In other embodiments, however, one or more members (e.g., 116, 118, 120 and/or 122) of the air system 34 may alternatively be arranged within a compartment of a pylon structure mounting the aircraft propulsion system 20 to an airframe of the aircraft and/or within a compartment of the airframe.

In some embodiments, referring to FIG. 1, the circuit inlet 126 may be disposed in the exterior surface 60. The circuit inlet 126 may thereby be (e.g., directly) fluidly coupled to the external environment 22, independent of the engine flowpath 76 or any other flowpath. The system circuit inlet 126 may also be arranged downstream of the guide vane structure 38 and its guide vanes 54. The circuit inlet 126 of FIG. 1, for example, is located axially along the propulsion system axis 24 between (a) the guide vane structure 38 and its guide vanes 54 and (b) the propulsion system aft end 28. The present disclosure, however, is not limited to such an exemplary arrangement.

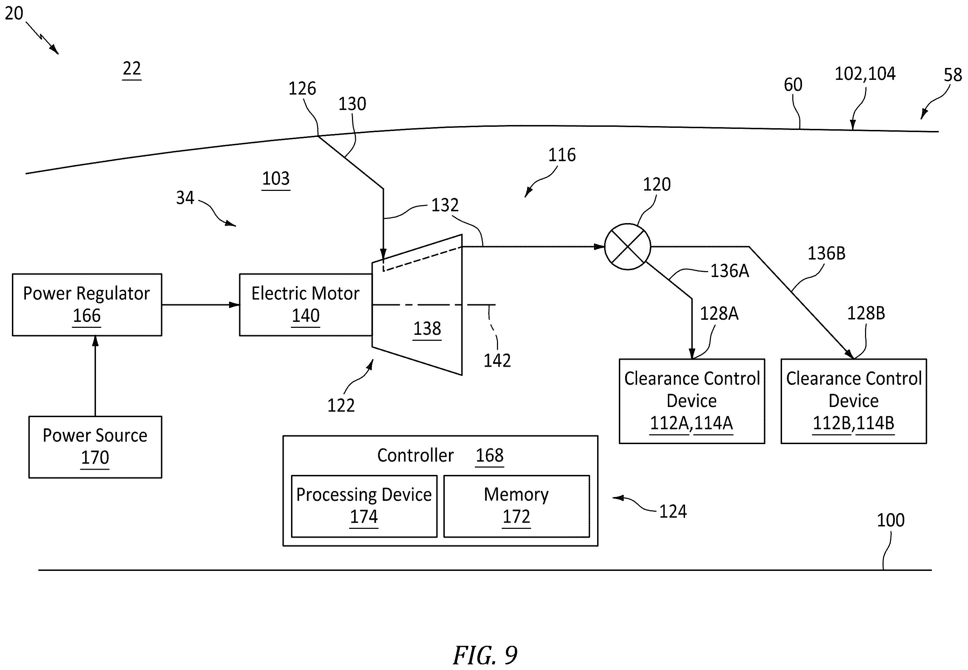

In some embodiments, referring to FIGS. 3 and 4, the air circuit 116 may include the parallel compressor and bypass legs 132 and 134. In other embodiments, referring to FIG. 9, the bypass leg may be omitted such that the air always flows through the boost compressor 122. With such an arrangement, the boost compressor 122 may simply be non-operational (e.g., and windmill) during the free-flow mode.

Referring to FIGS. 3 and 4, the propulsion system members 112 are described above as the clearance control devices 114 for ease of description. In other embodiments, however, one or more of the propulsion system members 112 may alternatively each be configured as a heat exchanger. This heat exchanger may be an air-oil cooler for a thermal management system (TMS) of the aircraft propulsion system 20 and its turbine engine 32. The heat exchanger may alternatively be a cooler for various electronics within the aircraft propulsion system 20 and/or otherwise onboard the aircraft. The heat exchanger may still alternatively be a pre-cooler for an environmental control system (ECS) for the aircraft. In other embodiments, one or more of the propulsion system members 112 may alternatively each be configured as one of the engine rotors 82-85 to facilitate air cooling of that respective engine rotor 82-85. In other embodiments, one or more of the propulsion system members 112 may alternatively each be configured as a compartment. Examples of the compartment include, but are not limited to, the housing compartment 103 or a bearing compartment in which one or more bearings are located for the rotating structure(s) 90 and/or 94.

The engine flowpath 76 of FIG. 1 extends longitudinally from the flowpath inlet 78, sequentially through the inlet section 68, the LPC section 69A, the HPC section 69B, the combustor section 70, the HPT section 71A, the LPT section 71B and the exhaust section 72, to the flowpath exhaust 80. The engine flowpath 76 of FIG. 1 is configured such that the core air and the combustion products generally flow in the aft, downstream direction towards the propulsion system aft end 28. The core air and the combustion products thereby flow along with the ambient air propelled by the rotating propulsor rotor 36 in a common axial direction - the downstream, aft direction. The turbine engine 32 of the present disclosure, however, is not limited to such an exemplary common flow engine arrangement. For example, the engine flowpath 76 may alternatively be configured such that the core air and the combustion products generally flow in a forward, upstream direction towards the propulsion system forward end 26. The core air and the combustion products may thereby flow in an opposite direction as the ambient air propelled by the rotating propulsor rotor 36. Here, the turbine engine 32 may have a reverse flow engine arrangement.

The aircraft propulsion system 20 of FIG. 1 and its propulsion section 30 are described above with a tractor configuration; e.g., where the propulsor rotor 36 is disposed at or otherwise near the propulsion system forward end 26. It is contemplated, however, the propulsion section 30 may alternatively be disposed at or otherwise near the propulsion system aft end 28 to provide a pusher fan configuration. Moreover, while the turbine engine 32 is described above with a particular two rotating structure arrangement, the present disclosure is not limited thereto. For example, the LPC rotor 82 may be omitted to configure the LPT rotor 85 as a power turbine (PT) rotor for the propulsor rotor 36. In another example, the turbine engine 32 may also include another rotating structure; e.g., an intermediate speed spool for the engine core 74.

The guide vane structure 38 is described above as a fixed (e.g., non-rotatable) guide vane structure. It is contemplated, however, the guide vane structure 38 may alternatively be selectively rotatable about the propulsion system axis 24. With such an arrangement, the aircraft propulsion system 20 may be configured as an open rotor propulsion system with a swirl recovery blade (SRB) open rotor architecture. More particularly, the aircraft propulsion system 20 may operate as: (A) a counter-rotating open rotor (CROR) propulsion system during a dual rotor mode of operation (e.g., when both the propulsor rotor 36 and the structure 38 are counter-rotating about the propulsion system axis 24); and (B) a single open rotor and swirl recovery vane (SRV) propulsion system during a single rotor mode of operation (e.g., when the propulsor rotor 36 is rotating and the structure 38 is rotationally fixed about the propulsion system axis 24). Note, when the guide vane structure 38 is configured to selectively rotate about the propulsion system axis 24, the moving guide vanes 54 operate as propulsor blades.

The aircraft propulsion system 20 of FIG. 1 and its propulsion section 30 are described as including the guide vane structure 38 with an SRV or SRB configuration. The present disclosure, however, is not limited to such an exemplary propulsion system configuration. For example, the aircraft propulsion system 20 may alternatively be configured without an open guide vane structure 38. The aircraft propulsion system 20 may thereby be configured as a single rotor (SR) open rotor propulsion system. In another example, the aircraft propulsion system 20 may alternatively be configured with a set of the open propulsor rotors (e.g., counter-rotating propulsor rotors) operatively coupled to the turbine engine 32 (see FIG. 1) through the geartrain 98. The aircraft propulsion system 20 may thereby be configured as a counter-rotating open rotor (CROR) propulsion system.

While various embodiments of the present disclosure have been described, it will be apparent to those of ordinary skill in the art that many more embodiments and implementations are possible within the scope of the disclosure. For example, the present disclosure as described herein includes several aspects and embodiments that include particular features. Although these features may be described individually, it is within the scope of the present disclosure that some or all of these features may be combined with any one of the aspects and remain within the scope of the disclosure. Accordingly, the present disclosure is not to be restricted except in light of the attached claims and their equivalents.

## Claims

1. A propulsion system for an aircraft, comprising:
an open propulsor rotor;
a turbine engine configured to drive rotation of the open propulsor rotor about an axis, the turbine engine including a first engine rotor and a first shroud, the first engine rotor including a first rotor base and a plurality of first rotor blades arranged circumferentially around the first rotor base in an array, and the first shroud next to and circumscribing the array of the plurality of first rotor blades; and
an air system including an electric boost compressor, an air circuit and a first clearance control device, the air circuit extending longitudinally through the electric boost compressor from an air source to the first clearance control device, and the first clearance control device configured to control a first clearance between the first shroud and the plurality of first rotor blades using air received from the air source through the air circuit.

2. The propulsion system of claim 1, wherein
the turbine engine further includes an engine case;
the first shroud is disposed radially inboard of and is attached to the engine case; and
the first clearance control device comprises a manifold separated from the engine case by a plenum, and the manifold includes a plurality of apertures configured to direct a plurality of air jets into the plenum towards the engine case; and/or
wherein the first engine rotor is a turbine rotor.

3. The propulsion system of claim 1 or 2, wherein the first engine rotor is operatively coupled to the open propulsor rotor, or,
wherein the first engine rotor is operatively decoupled from the open propulsor rotor.

4. The propulsion system of claim 1, 2 or 3, wherein
the air circuit includes an inlet leg and a plurality of distribution legs downstream of and fluidly coupled in parallel to the inlet leg;
the electric boost compressor arranged inline along the air circuit between the inlet leg and the plurality of distribution legs;
a first of the plurality of distribution legs is fluidly coupled with and upstream of the first clearance control device;
a second of the plurality of distribution legs is fluidly coupled with and upstream of a member of the aircraft that is discrete from the first clearance control device.

5. The propulsion system of claim 4, wherein
the turbine engine further includes a second engine rotor and a second shroud, the second engine rotor includes a second rotor base and a plurality of second rotor blades arranged circumferentially around the second rotor base in an array, and the second shroud is next to and circumscribes the array of the plurality of second rotor blades; and
the air system further includes a second clearance control device, the second clearance control device is configured to control a second clearance between the second shroud and the plurality of second rotor blades using the air received from the air source through the air circuit, and the member of the aircraft comprises the second clearance control device.

6. The propulsion system of claim 4 or 5, wherein the air circuit further includes a flow regulator configured to
direct at least some of the air received from the air source through the inlet leg to the first of the plurality of distribution legs during a first mode; and
direct at least some of the air received from the air source through the inlet leg to the second of the plurality of distribution legs during a second mode.

7. The propulsion system of claim 6, wherein the flow regulator is further configured to fluidly decouple the inlet leg from the second of the plurality of distribution legs during the first mode; and/or
wherein the flow regulator is further configured to fluidly decouple the inlet leg from the first of the plurality of distribution legs during the second mode.

8. The propulsion system of any preceding claim, wherein
the air circuit includes a plurality of parallel legs upstream of the first clearance control device;
a first of the plurality of parallel legs extends longitudinally through the electric boost compressor; and
a second of the plurality of parallel legs bypasses the electric boost compressor.

9. The propulsion system of claim 8, wherein
the air circuit further includes an inlet leg extending longitudinally from an airflow inlet into the air circuit towards the plurality of parallel legs; and
the air system further includes a flow regulator configured to
direct at least some of the air received from the air source through the inlet leg to the first of the plurality of parallel legs during a first mode; and
direct at least some of the air received from the air source through the inlet leg to the second of the plurality of parallel legs during a second mode.

10. The propulsion system of claim 9, wherein the flow regulator is further configured to fluidly decouple the inlet leg from the second of the plurality of parallel legs during the first mode; and/or
wherein the flow regulator is further configured to fluidly decouple the inlet leg from the first of the plurality of parallel legs during the second mode.

11. The propulsion system of any preceding claim, wherein the air source is outside of the turbine engine.

12. The propulsion system of any preceding claim, further comprising:
a housing structure housing the turbine engine and the air system;
the housing structure comprising an exterior surface bordering an environment external to the propulsion system; and
an airflow inlet into the air circuit from the air source disposed in the exterior surface, optionally,
further comprising:
a plurality of open guide vanes arranged circumferentially about the housing structure;
a first of the plurality of open guide vanes projecting radially out from the housing structure into the environment external to the propulsion system; and
the airflow inlet into the air circuit disposed between the first of the plurality of open guide vanes and a combustion products exhaust from the turbine engine.

13. A propulsion system for an aircraft, comprising:
a turbine engine including a first engine rotor, a second engine rotor, a first shroud and a second shroud, the first engine rotor including a first rotor base and a plurality of first rotor blades arranged circumferentially around the first rotor base in a first rotor blade array, the first shroud next to and circumscribing the first rotor blade array, the second engine rotor including a second rotor base and a plurality of second rotor blades arranged circumferentially around the second rotor base in a second rotor blade array, and the second shroud next to and circumscribing the second rotor blade array; and
an air system including an electric boost compressor, an air circuit, a first clearance control device and a second clearance control device, the air circuit extending longitudinally through the electric boost compressor from an air source to the first clearance control device and the second clearance control device, the first clearance control device aligned with and circumscribing the first shroud, the second clearance control device aligned with and circumscribing the second shroud, and the air system configured to selectively direct air received from an airflow inlet into the air circuit to at least one of the first clearance control device or the second clearance control device.

14. The propulsion system of claim 13, wherein the air system is further configured to selectively direct the air received from the airflow inlet into the air circuit at least one of through the electric boost compressor or around the electric boost compressor prior to directing the air to the at least one of the first clearance control device or the second clearance control device.

15. A propulsion system for an aircraft, comprising:
an open propulsor rotor;
a turbine engine configured to drive rotation of the open propulsor rotor about an axis; and
an air system including an electric boost compressor, an air circuit and a flow regulator, the air circuit extending longitudinally from an airflow inlet into the propulsion system to a member of the propulsion system, the air circuit including an inlet leg and a plurality of circuit legs, the plurality of circuit legs fluidly coupled in parallel between the inlet leg and the member of the propulsion system, a first of the plurality of circuit legs extending longitudinally through the electric boost compressor, a second of the plurality of circuit legs bypassing the electric boost compressor, the flow regulator configured to fluidly couple the inlet leg to the first of the plurality of circuit legs during a first mode, and the flow regulator configured to fluidly couple the inlet leg to the second of the plurality of circuit legs during a second mode.
